# EUROPÄISCHE PATENTANMELDUNG

(11) **EP 1 860 420 A1**
(43) Veröffentlichungstag der Anmeldung: **28.11.2007**
(21) Anmeldenummer: 06405220.2
(22) Anmeldetag: 23.05.2006
(51) Int. Cl.: G01M 3/28, E03B 7/09

(54) **Vorrichtung und Verfahren zum Befüllen und Druckprüfen von Rohrleitungssystemen mit entkeimten Wasser**

(71) Anmelder: GEBERIT TECHNIK AG, 8645 Jona (CH)
(72) Erfinder: Rüesch, Thomas, 8808 Pfäffikon (CH); Schröter, Achim, 8863 Buttikon (CH)
(74) Vertreter: Groner, Manfred

(57) **Zusammenfassung**

Die Vorrichtung weist eine Wasserbehandlungseinheit (6), eine erste Kupplung (K1) zum Anschliessen der Wasserbehandlungseinheit (6) an eine Wasserentnahmestelle (W) und eine zweite Kupplung (K2) zum Anschliessen der Wasserbehandlungseinheit (6) an ein Rohrleitungssystem (R) auf. Zwischen den beiden Kupplungen (K1, K2) verläuft in der Wasserbehandlungseinheit (6) ein Strömungskanal (29), in dem Wasser von der ersten Kupplung (K1) zur zweiten Kupplung (K2) fliessen kann. In diesem Strömungskanal (29) ist ein Entkeimungsmittel (9) angeordnet, in dem durchströmendes Wasser entkeimt wird.

## Beschreibung

Die Erfindung betrifft eine Vorrichtung zum Befüllen und Druckprüfen von Rohrleitungssystemen sowie ein entsprechendes Verfahren.

Neue Rohrleitungssysteme in Gebäuden müssen mit einem vorbestimmten Druck auf deren Dichtigkeit geprüft werden. Die Prüfung kann mit Luft bzw. Gas oder mit Wasser durchgeführt werden. Es bestehen hierzu je nach Land gesetzliche Vorschriften. Nach erfolgter Druckprüfung muss das Rohrleitungssystem mit einem Luft-/Wassergemisch oder nur mit Wasser gespült werden.

Aus hygienischer Sicht ist die Druckprüfung mit Luft oder Gas einer Druckprüfung mit Wasser vorzuziehen, da hierbei keine Keime in das neue Rohrleitungssystem eingebracht werden. Bei der Prüfung mit Luft bzw. Gas besteht allerdings der Nachteil, dass eine Undichtigkeit nicht sofort ersichtlich ist. Gewohnheitsgemäss führen deshalb die meisten Installateure die Prüfung mit Wasser durch. In bestimmten Ländern ist zudem eine Druckprüfung mit Luft bzw. Gas aufgrund der Unfallgefahr nicht zulässig.

Bei der Druckprüfung mit Wasser besteht die Gefahr, dass das Wasser aus Quellen entnommen wird, die hygienisch sehr bedenklich sind. Beispielsweise wird das Wasser mit einem Baustellenschlauch, einer Gartenleitung oder aus einem verschmutzten Eimer zugeführt. Zudem besteht das Risiko, dass die verwendeten Prüfpumpen verschmutzt sind und ein hohes Verkeimungspotential enthalten. Es sind Fälle bekannt geworden, bei denen durch das Einbringen von Keimen während der Druckprüfung ganze Gebäudeinstallationen kontaminiert wurden. Diese Gebäudeinstallationen mussten daraufhin sehr aufwendig desinfiziert werden.

Der Erfindung liegt die Aufgabe zugrunde, eine Vorrichtung und ein Verfahren zu schaffen, das die genannten Nachteile vermeidet. Die Erfindung soll es dem Installateur ermöglichen, eine hygienisch einwandfreie Druckprobe, Befüllung und Spülung eines neu installierten Rohrleitungssystems durchzuführen.

Die erfindungsgemässe Vorrichtung besitzt eine Wasserbehandlungseinheit, eine erste Kupplung zum Anschliessen der Wasserbehandlungseinheit an eine Wasserentnahmestelle und eine zweite Kupplung zum Anschliessen der Wasserbehandlungseinheit an ein zu prüfendes Rohrleitungssystem. Zwischen den beiden Kupplungen verläuft in der Wasserbehandlungseinheit ein Strömungskanal, in dem Wasser von der ersten Kupplung zur zweiten Kupplung fliessen kann. In diesem Strömungskanal ist ein Entkeimungsmittel angeordnet, in dem das durchströmende Wasser entkeimt wird. Die erfindungsgemässe Vorrichtung verhindert, dass auch bei der Verwendung von verschmutztem Wasser keine Keime in das Rohrleitungssystem gelangen können. Nach der Druckprüfung muss lediglich die Vorrichtung ausgetauscht oder desinfiziert werden, um eine Keimverschleppung zu verhindern.

Nach einer Weiterbildung der Erfindung ist in der Vorrichtung ein Rückschlagventil integriert, das verhindert, dass Wasser aus dem Rohrleitungssystem zurückfliessen kann.

Die beiden Kupplungen sind so ausgebildet, dass die Wasserbehandlungseinheit mit einfachen Handgriffen an die Wasserentnahmestelle und an das Rohrleitungssystem angeschlossen werden kann. Die Wasserbehandlungseinheit wird insbesondere an eine an sich bekannte Wasseranschlussinstallation angeschlossen, die insbesondere einen Wasserzähler und Absperrventile aufweist, wie dies beispielsweise in der CH 640 290 beschrieben ist.

Ein besonders einfacher Anschluss ist dann gewährleistet, wenn wenigstens eine der Kupplungen als Steckkupplung ausgebildet ist. Vorzugsweise sind beide Kupplungen Steckkupplungen.

Das Entkeimungsmittel ist insbesondere ein Filter, beispielsweise ein Mikrofilter. Geeignet ist hier insbesondere ein Keramikfilter. Dieser ist nach einer Weiterbildung der Erfindung an einem Deckel eines Gehäuses befestigt. Dies ermöglicht einen einfachen Austausch des Filters. Grundsätzlich können aber an sich beliebige Filter und insbesondere Bakterienfilter verwendet werden. Solche Filter sind handelsüblich. Es können zudem verschiedene Wasserbehandlungsverfahren, wie beispielsweise Mikrofiltration über Filterscheiben, Fliese, Hohlfasermodule, Filterkerzen, chemische Desinfektion/Konservierung während des Durchfliessens des Wassers, beispielsweise mit Chlor, Ozon, Chlordioxyd, Silber und dergleichen verwendet werden. Denkbar ist auch ein Entkeimen mit UV-Strahlung oder Ultrafiltration. Nach einer Weiterbildung der Erfindung weist die Vorrichtung Mittel zum Beigeben eines Konservierungsmittels auf.

Beim erfindungsgemässen Verfahren wird die Wasserbehandlungseinheit zwischen eine Wasserentnahmestelle und ein Rohrleitungssystem geschaltet. Das Rohrleitungssystem wird bis zum Erreichen eines vorbestimmten Prüfdruckes gefüllt, wobei das ins Rohrleitungssystem einfliessende Wasser in der Wasserbehandlungseinheit entkeimt wird. Nach der Druckprüfung wird die Wasserbehandlungseinheit entfernt und das Rohrleitungssystem an eine Versorgungsleitung angeschlossen. Über die Versorgungseinheit wird das Rohrleitungssystem mit Trinkwasser gespült. Die erfindungsgemässe Vorrichtung bzw. das erfindungsgemässe Verfahren verbessern die Trinkwasserhygiene auch in den Fällen, in denen Wasser der Wasserentnahmestelle hygienisch nicht einwandfrei bzw. mit Keimen belastet ist.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: schematisch eine erfindungsgemässe Vorrichtung, die an eine Wasserentnahmestelle und an ein Rohrleitungssystem angeschlossen ist,
- Figur 2: eine vereinfachte schematische Darstellung entsprechend der Figur 1 und
- Figur 3: schematisch einer Wasserbehandlungseinheit sowie Kupplungen in auseinander gezogenen Stellungen.

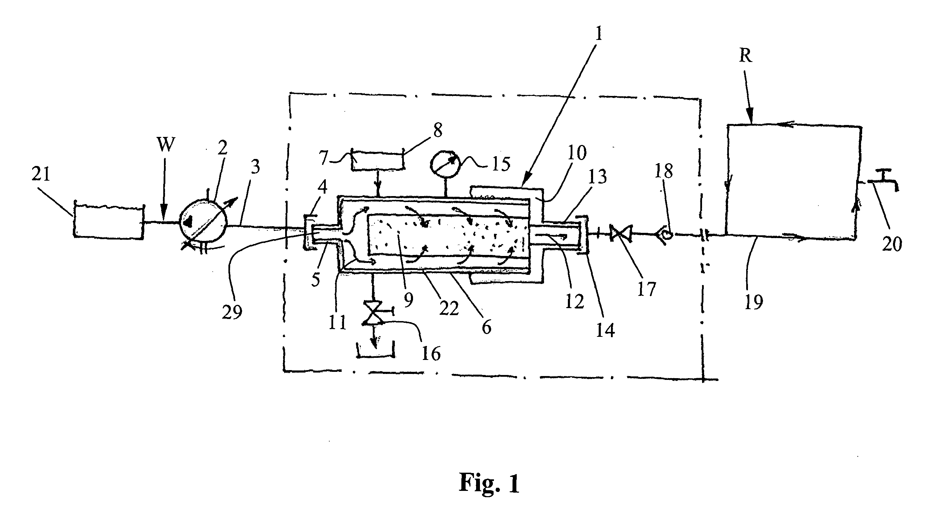

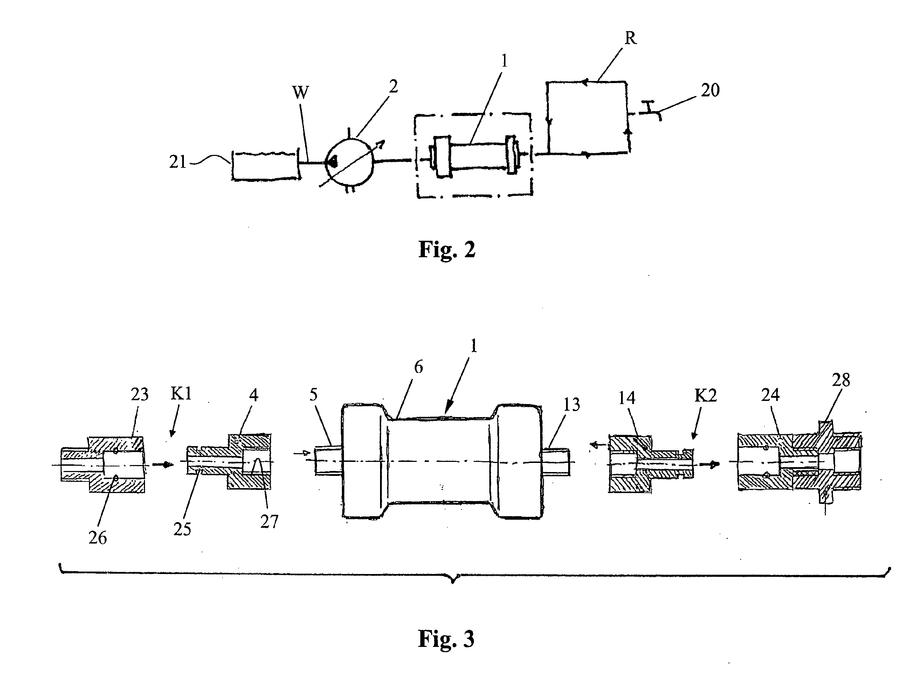

Die in den Figuren 1 und 2 gezeigte Vorrichtung 1 wird zum Prüfen der Dichtigkeit eines Rohrleitungssystems R zwischen dieses und eine Wasserentnahmestelle W geschaltet. Zum Verbinden der Vorrichtung 1 mit der Wasserentnahmestelle W besitzt die Vorrichtung 1 eine erste Kupplung K1 und zum Anschliessen am Rohrleitungssystem R eine zweite Kupplung K2. Das beim Druckprüfen von der Wasserentnahmestelle W zum Rohrleitungssystem R fliessende Wasser gelangt von der ersten Kupplung K1 in einen Strömungskanal 29 der Vorrichtung 1. Die Strömungsrichtung ist in Figur 1 mit den Pfeilen 11 angedeutet. Das Wasser strömt somit in der Figur 1 von links nach rechts. Im Strömungskanal 29 ist ein Filter 9 angeordnet, der als Entkeimungsmittel vorgesehen ist. Der Filter 9 bzw. das Entkeimungsmittel bildet mit einem Gehäuse 22 eine Wasserbehandlungseinheit 6. Das Wasser wird im Filter 9 filtriert und insbesondere entkeimt, so dass das aus der Wasserbehandlungseinheit 6 im Bereich der zweiten Kupplung K2 ausströmende Wasser entkeimt ist. In das Rohrleitungssystem R gelangt somit auch dann nur entkeimtes Wasser, wenn das Wasser der Wasserentnahmestelle W verschmutzt sein sollte.

Das Rohrleitungssystem R ist irgendeine neue oder renovierte Gebäudeinstallation mit einer Leitung 19 für Trinkwasser. Das Rohrleitungssystem R besitzt in bekannter Weise Armaturen 20 und in der Regel eine Wasseranschlussinstallation, beispielsweise gemäss der CH 640 290. Eine solche Wasseranschlussinstallation ist üblicherweise in einem Untergeschoss, beispielsweise einem Keller eines Gebäudes installiert. Sie wird nach der Durchführung der Druckprüfung an eine Wasserversorgungsleitung angeschlossen.

Die Wasserentnahmestelle W besteht beispielsweise aus einem Wasserbehälter 21 und einer Pumpe 2. Mit der Pumpe 2 kann Wasser des Wasserbehälters 21 in eine Leitung 3 gepumpt werden, die beispielsweise ein Schlauch ist. An dem freien Ende der Leitung 3 ist der in Figur 3 gezeigte Kupplungsteil 23 befestigt, der mit einem Anschlusselement 4 die erste Kupplung K1 bildet. Diese Kupplung K1 ist als Steckkupplung ausgebildet, wobei eine Nut 25 des Anschlusselementes 4 mit einem Ring 26 des Kupplungsteils 23 zusammenarbeitet. Solche lösbaren Steckverbindungen sind an sich bekannt. Die Kupplung K1 kann hier jedoch beispielsweise auch als Bajonettkupplung oder Schraubkupplung ausgebildet sein. Das Anschlusselement 4 besitzt ein Innengewinde 27 und ist auf einen Anschlussstutzen 5 des Gehäuses 22 bzw. der Wasserbehandlungseinheit 6 aufgeschraubt. Das Anschlusselement 4 kann auch auf andere Weise mit dem Gehäuse 22 verbunden sein. Beispielsweise ist auch eine feste nicht lösbare Verbindung zwischen dem Gehäuse 22 und dem Anschlusselement 4 denkbar. Zum Anschliessen der Wasserentnahmestelle W an die Vorrichtung 1 muss somit lediglich der Kupplungsteil 23 mit dem Anschlusselement 4 gekuppelt bzw. aufgesteckt werden. Nach der Druckprüfung kann diese Verbindung in einfacher Weise wieder gelöst werden.

Die zweite Kupplung K2 ist hier vorzugsweise ebenfalls als Steckkupplung ausgebildet. Diese Kupplung K2 besitzt ein Anschlusselement 14, das auf einen Anschlussstutzen 13 der Wasserbehandlungseinheit 6 aufgeschraubt ist. Der Stutzen 13 ist insbesondere an einem Deckel 10 angeordnet, der auf das Gehäuse 22 aufgeschraubt ist. Die Strömungsrichtung des Wassers im Stutzen 13 ist in Figur 1 mit dem Pfeil 12 angedeutet. Das Anschlusselement 14 wird beim Anschliessen der Vorrichtung 1 mit einem Kupplungsteil 24 gekuppelt, der beispielsweise auf einen Fitting 28 aufgeschraubt ist. Dieser Fitting 28 ist mit einem in Figur 1 lediglich angedeuteten Absperrventil 17 verbunden. Dieses wiederum ist mit einem Rückschlagventil 18 verbunden, wie dies in Figur 1 gezeigt ist. Bei geöffneten Absperrventil 17 kann somit Wasser von der Vorrichtung 1 in das Rohrleitungssystem R gefördert werden, es kann jedoch kein Wasser aus dem Rohrleitungssystem R in die Vorrichtung 1 gelangen. Das Rückschlagventil 18 kann auch direkt in der Kupplung K2 integriert sein.

Die Vorrichtung 1 ist mit einem an sich bekannten Manometer 15 für die Druckprüfung versehen. Anhand des Manometers kann der Druck im Strömungskanal 29 überprüft werden. An das Gehäuse 22 ist ferner ein Behälter 8 mit einem Konservierungsmittel 7 angebracht. Dadurch ist es möglich, in den Strömungskanal 29 ein geeignetes Konservierungsmittel einströmen zu lassen. Schliesslich ist am Gehäuse 22 ein Ablassventil 16 angeordnet. Über dieses Ablassventil 16 kann nach einer Druckprüfung der Strömungskanal 29 entleert werden.

Der Filter 9 ist beispielsweise ein Mikrofilter. Dieser kann so ausgebildet sein, dass er nach jeder Druckprüfung ausgewechselt werden muss. Es sind hier aber auch Mikrofilter denkbar, die eine Kapazität aufweisen, welche ein Entkeimen für mehrere Druckprüfungen ermöglicht. Solche Mikrofilter sind beispielsweise als Patronen bekannt. Beim Filter 9 handelt es sich selbstverständlich nicht um einen an sich bekannten groben Filter, mit dem feste Teile ausgefiltert werden können. Ein solcher Filter kann selbstverständlich zusätzlich vorhanden sein. Der Filter 9 entfernt bzw. eliminiert aus dem Wasser sämtliche Keime, welche das Wasser im Rohrleitungssystem R kontaminieren könnten. Der Filter 9 kann durch Konservierungsmittel 7 aus dem Behälter 8 oder beispielsweise auch durch UV-Strahlung unterstützt sein. Als Filter 9 sind Filterkerzen, beispielsweise aus Keramik, Filterscheiben, Fliese, Hohlfasermodule und Membrane denkbar. Der Filter 9 kann nach jedem Gebrauch ausgetauscht oder desinfiziert werden. Damit wird eine Verkeimung während des Nichtgebrauches vermieden. Desinfiziert werden ebenfalls nach jedem Gebrauch die Anschlusselemente 4 und 14 der Vorrichtung 1. Der Filter 9 ist beispielsweise so ausgebildet, dass das Rohrleitungssystem R bei einem Fliessdruck von 3 bar mit 0,3 1/Sek. gefüllt werden kann.

Zum Druckprüfen des Rohrleitungssystems R wird die Vorrichtung 1 mit der Kupplung K1 an die Wasserentnahmestelle W und mit der Kupplung K2 an das Rohrleitungssystem R angeschlossen. Das Rohrleitungssystem R wird bis zum Erreichen eines vorbestimmten Prüfdruckes gefüllt. Wie oben erläutert, wird das in das Rohrleitungssystem R einfliessende Wasser im Strömungskanal 29 durch den Filter 9 und gegebenenfalls noch durch Konservierungsmittel 7 entkeimt. Nach der Druckprüfung wird die Wasserbehandlungseinheit entfernt und das Rohrleitungssystem R an eine Versorgungsleitung angeschlossen.

### Bezugszeichenliste

- 1: Vorrichtung
- 2: Pumpe
- 3: Leitung
- 4: Anschlusselement
- 5: Anschlussstutzen
- 6: Wasserbehandlungseinheit
- 7: Konservierungsmittel
- 8: Behälter
- 9: Filter (Wasserbehandlungseinheit)
- 10: Deckel
- 11: Pfeil
- 12: Pfeil
- 13: Anschlussstutzen
- 14: Anschlusselement
- 15: Manometer
- 16: Ablassventil

- 17: Absperrventil
- 18: Rückschlagventil
- 19: Leitung
- 20: Armatur
- 21: Wasserbehälter
- 22: Gehäuse
- 23: Kupplungsteil
- 24: Kupplungsteil
- 25: Nut
- 26: Ring
- 27: Innengewinde
- 28: Fitting
- 29: Strömungskanal
- K1: erste Kupplung
- K2: zweite Kupplung
- R: Rohrleitungssystem
- W: Wasserentnahmestelle

## Patentansprüche

1. Vorrichtung zum Befüllen und Druckprüfen von Rohrleitungssystemen (R), mit einer Wasserbehandlungseinheit (6), einer ersten Kupplung (K1) zum Anschliessen der Wasserbehandlungseinheit (6) an eine Wasserentnahmestelle (W) und einer zweiten Kupplung (K2) zum Anschliessen der Wasserbehandlungseinheit (6) an ein Rohrleitungssystem (R), wobei zwischen den beiden Kupplungen (K1, K2) in der Wasserbehandlungseinheit (6) ein Strömungskanal (29) verläuft, in dem Wasser von der ersten Kupplung (K1) zur zweiten Kupplung (K2) fliessen kann und in diesem Strömungskanal (29) ein Entkeimungsmittel (9) angeordnet ist, in dem durchströmendes Wasser entkeimt wird.

2. Vorrichtung nach Anspruch 1, **dadurch gekennzeichnet, dass** wenigstens eine der beiden Kupplungen (K1, K2) als Steckkupplung ausgebildet ist.

3. Vorrichtung nach Anspruch 1 oder 2, **dadurch gekennzeichnet, dass** das Entkeimungsmittel (9) einen Filter aufweist.

4. Vorrichtung nach Anspruch 3, **dadurch gekennzeichnet, dass** der Filter ein Mikrofilter ist.

5. Vorrichtung nach einem der Ansprüche 1 bis 4, **dadurch gekennzeichnet, dass** sie Mittel (8) zum Beigeben eines Konservierungsmittels (7) aufweist.

6. Vorrichtung nach einem der Ansprüche 1 bis 5, **dadurch gekennzeichnet, dass** sie ein Entleerungsventil (16) aufweist.

7. Vorrichtung nach einem der Ansprüche 1 bis 6, **dadurch gekennzeichnet, dass** nach dem Entkeimungsmittel (9) ein Rückfluss- (18) und/oder Absperrventil (17) angeordnet ist bzw. sind.

8. Vorrichtung nach einem der Ansprüche 1 bis 7, **dadurch gekennzeichnet, dass** sie eine Druckanzeige (15) aufweist.

9. Vorrichtung nach einem der Ansprüche 1 bis 8, **dadurch gekennzeichnet, dass** das Entkeimungsmittel (9) auswechselbar ist.

10. Vorrichtung nach einem der Ansprüche 1 bis 9, **dadurch gekennzeichnet, dass** sie ein Gehäuse (22) mit einem Deckel (10) aufweist.

11. Vorrichtung nach Anspruch 3 und 10, **dadurch gekennzeichnet, dass** das Entkeimungsmittel (9) am Deckel (10) befestigt ist.

12. Vorrichtung nach Anspruch 11, **dadurch gekennzeichnet, dass** der Deckel (10) ein Gewindedeckel und das Entkeimungsmittel (9) eine Filterkerze oder dergleichen ist.

13. Verfahren zum Befüllen und Druckprüfen von Rohrleitungssystemen (R), **dadurch gekennzeichnet, dass** eine Wasserbehandlungseinheit (6) zwischen einer Wasserentnahmestelle (W) und einem Rohrleitungssystem (R) geschaltet wird und dass das Rohrleitungssystem (R) bis zum Erreichen eines vorbestimmten Prüfdruckes gefüllt wird, wobei das in das Rohrleitungssystem (R) einfliessende Wasser in der Wasserbehandlungseinheit (6) entkeimt wird und dass nach der Druckprüfung die Wasserbehandlungseinheit (6) entfernt und das Rohrleitungssystem (R) an eine Versorgungsleitung angeschlossen wird.

14. Verfahren nach Anspruch 13, **dadurch gekennzeichnet, dass** dem Wasser ein Konservierungsmittel (7) zugefügt wird.

15. Verfahren nach Anspruch 13 oder 14, **dadurch gekennzeichnet, dass** das Wasser dem Rohrleitungssystem (R) über ein Ablassventil (17) und/oder ein Rückschlagventil (18) zugeführt wird.
